# EUROPÄISCHE PATENTSCHRIFT

(11) **EP 1 761 714 B1**
(45) Veröffentlichungstag und Bekanntmachung des Hinweises auf die Patenterteilung: **13.02.2008**
(21) Anmeldenummer: 05726516.7
(22) Anmeldetag: 28.04.2005
(51) Int. Cl.: F16D 65/14, F16D 55/00

(54) **SELBSTVERSTÄRKENDE ELEKTROMECHANISCHE REIBUNGSBREMSE**
SELF-ENERGIZING ELECTROMECHANICAL FRICTION BRAKE
FREIN A FRICTION ELECTROMECANIQUE AUTO-AMPLIFIE

(30) Priorität: 19.06.2004 DE 102004029841
(43) Veröffentlichungstag der Anmeldung: 14.03.2007
(73) Patentinhaber: ROBERT BOSCH GMBH, 70442 Stuttgart (DE)
(72) Erfinder: BAUMANN, Dietmar, 71282 Hemmingen (DE); HOFMANN, Dirk, 71636 Ludwigsburg (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71696 Moeglingen (DE)
(86) Internationale Anmeldenummer: PCT/EP2005/051922
(87) Internationale Veröffentlichungsnummer: WO 2005/124181

(56) Entgegenhaltungen:
- DE-A- 10 226 035
- DE-A- 10 230 008
- DE-A1- 10 223 389
- GB-A- 1 063 073

## Beschreibung

### Stand der Technik

Die Erfindung betrifft eine selbstverstärkende elektromechanische Reibungsbremse für ein Kraftfahrzeug mit den Merkmalen des Oberbegriffs des Anspruchs 1.

Die Erfindung wird nachfolgend anhand einer Scheibenbremse erläutert werden weil bekannte gattungsgemäße Reibungsbremsen üblicherweise Scheibenbremsen sind und weil sich die Erfindung anhand einer Scheibenbremse anschaulich erläutern lässt. Die Erfindung ist allerdings nicht auf diesen Bremsentyp beschränkt.

Bekannte elektromechanische Reibungsbremsen weisen einen Reibbremsbelag auf, der zum Bremsen mit einem elektromechanischen Aktuator gegen einen Bremskörper drückbar ist. Im Falle einer Scheibenbremse ist der Bremskörper eine Bremsscheibe. Der Aktuator weist üblicherweise einen Elektromotor und ein Rotations/Translations-Umsetzungsgetriebe auf, das eine rotierende Antriebsbewegung des Elektromotors in eine translatorische Bewegung zum Drücken des Reibbremsbelags gegen den Bremskörper umwandelt. Dem Elektromotor und dem Rotations/Translations-Umsetzungsgetriebe ist vielfach ein Untersetzungsgetriebe, beispielsweise ein Planetengetriebe, zwischengeschaltet. Als Rotations/Translations-Umsetzungsgetriebe sind Schraubgetriebe bekannt, wegen der geringeren Reibung werden vorzugsweise Wälzgewindetriebe wie beispielsweise Rollengewindetriebe verwendet. Es ist allerdings beispielsweise auch ein drehbarer Nocken als Rotations/Translations-Umsetzungsgetriebe zur Umsetzung der rotierenden Antriebsbewegung des Elektromotors bzw. des Untersetzungsgetriebes in eine translatorische Bewegung zum Drücken des Reibbremsbelags gegen den Bremskörper verwendbar.

Des Weiteren weisen elektromechanische Scheibenbremsen einen weiteren Reibbremsbelag auf, der durch eine Reaktionskraft, die durch das Drücken des einen Reibbremsbelags gegen den Bremskörper verursacht wird, gegen den Bremskörper gedrückt wird. Zur Erzeugung der Reaktionskraft sind sog. Schwimmsättel bekannt, in denen die Reibbremsbeläge beiderseits einer Bremsscheibe einliegen. Der Schwimmsattel ist quer zur Bremsscheibe verschiebbar gelagert. Beim Drücken des einen Reibbremsbelags mit dem Aktuator gegen die eine Seite der Bremsscheibe verschiebt sich der Schwimmsattel quer zur Bremsscheibe und drückt den weiteren Reibbremsbelag gegen die andere Seite der Bremsscheibe.

Zur Erzielung einer Selbstverstärkung finden in bekannten elektromechanischen Scheibenbremsen Selbstverstärkungseinrichtungen mit einem Keilmechanismus Verwendung. Dabei ist ein Reibbremsbelag in Dreh- oder Umfangsrichtung der Bremsscheibe beweglich und weist einen Keil auf einer der Bremsscheibe abgewandten Seite auf. Über den Keil stützt sich der Reibbremsbelag an einer Gegenkeilfläche im Bremssattel ab, die ein Widerlager für den Keil bildet. Wird der Reibbremsbelag zum Bremsen gegen die Bremsscheibe gedrückt, übt diese eine Reibungskraft in Drehrichtung der Bremsscheibe auf den Reibbremsbelag aus, die diesen in Richtung eines enger werdenden Keilspalts zwischen der Gegenkeilfläche und der Bremsscheibe beaufschlagt. Aufgrund des Keilprinzips übt der Keilmechanismus eine Kraft auf den Reibbremsbelag aus, die eine Komponente quer zur Bremsscheibe aufweist. Diese Querkomponente bildet eine Andruckkraft, die den Reibbremsbelag zusätzlich zu einer vom Aktuator aufgebrachten Andruckkraft gegen die Bremsscheibe drückt. Die Bremskraft wird dadurch verstärkt. Die Selbstverstärkungseinrichtung wandelt die von der drehenden Bremsscheibe auf den gegen sei gedrückten Reibbremsbelag ausgeübte Reibungskraft in die zusätzliche Andruckkraft. Der Keilmechanismus kann einen über einen Verschiebeweg des Reibbremsbelags konstanten oder auch einen sich ändernden Keilwinkel aufweisen, so dass die Selbstverstärkung konstant ist oder sich mit der Verschiebung des Reibbremsbelags ändert. Beim Keilmechanismus handelt es sich um eine mechanische Selbstverstärkungseinrichtung. Als mechanische Selbsverstärkungseinrichtung ist beispielsweise auch ein Hebelmechanismus bekannt, bei dem sich der Reibbremsbelag beim Drücken gegen den Bremskörper über einen schräg stehenden, auf Zug oder auf Druck beanspruchten Hebel abstützt und dadurch die Selbstverstärkung bewirkt. Dabei entspricht ein Stützwinkel, unter dem der Hebel den Reibbremsbelag schräg zur Bremsscheibe abstützt, dem Keilwinkel des Keilmechanismus. Es sind auch nicht-mechanische Selbstverstärkungseinrichtungen, beispielsweise eine hydraulische Selbstverstärkungseinrichtung möglich. Üblicherweise wirkt die Selbstverstärkungseinrichtung auf den vom Aktuator beaufschlagten Reibbremsbelag, was jedoch nicht zwingend ist, die Selbstverstärkungseinrichtung kann auch auf einen nicht vom Aktuator beaufschlagten Reibbremsbelag wirken.

Da sich ein Reibwert zwischen dem Reibbremsbelag und dem Bremskörper mit den Betriebsbedingungen, wie beispielsweise einer Drehzahl des Bremskörpers, d. h. einer Relativgeschwindigkeit zwischen Bremskörper und Reibbremsbelag, Temperatur, Verschmutzung, Nässe ändert, ändert sich in gleichem Maße auch die von der Selbstverstärkungseinrichtung bewirkte Andruckkraft des Reibbremsbelags gegen den Bremskörper und damit eine Bremskraft bzw. ein Bremsmoment bei konstanter Betätigungskraft des Aktuators. Dies hat die Konsequenz, dass bei einem durch Reibwertschwankung niedrigen Rei bwert zur Erzeugung einer bestimmten Bremskraft eine große Betätigungskraft und damit eine hohe Betätigungsenergie vom Aktuator aufgebracht werden muss. Um diesem Problem zu begegnen ist eine Selbstverstärkungseinrichtung mit einem Keilmechanismus mit verstellbarem Keilwinkel, d. h. einer einstellbaren Selbstverstärkung vorgeschlagen worden.

Des weiteren ist in DE10230008 vorgeschlagen worden, den Reibwert zwischen der Bremsscheibe und einem an einer Keilflächegeführten Reibbremsbelag mit einem Schwringungserzeuger zu steuern.

Die vorliegende Erfindung zeigt einen anderen Weg auf.

### Vorteile und Erläuterung der Erfindung

Die erfindungsgemäße Reibungsbremse mit den Merkmalen des Anspruchs 1 sieht vor, dass der Reibbremsbelag, der von der Selbstverstärkungseinrichtung gegen den Bremskörper gedrückt wird, eine kleinere Reibwertschwankung aufweist als der andere Reibbremsbelag. Eine kleinere Reibwertschwankung ist erreichbar durch Verwendung eines anderen Materials für den Reibbremsbelag, insbesondere durch ein Material, das einen kleineren Reibwert mit dem Bremskörper aufweist als der andere, nicht (unmittelbar) von der Selbstverstärkungseinrichtung beaufschlagte Reibbremsbelag. Reibbremsbeläge mit niedrigerem Reibwert weisen üblicherweise auch eine kleinere Reibwertschwankung im Betrieb auf, wobei nicht nur die absolute, sondern auch die relative, d. h. auf einen absoluten Reibwert bezogene Reibwertschwankung kleiner als bei Reibbremsbelägen mit größerem Reibwert ist. Als absoluter Reibwert kann beispielsweise ein Mittelwert der im Betrieb auftretenden Reibwerte gewählt werden. Durch die kleinere (relative) Reibwertschwankung des Reibbremsbelags, der von der Selbstverstärkungseinrichtung gegen den Bremskörper gedrückt wird, verringert sich die Schwankung der von der Selbstverstärkungseinrichtung auf den Reibbremsbelag ausgeübten Andruckkraft, die Selbstverstärkung und die Bremskraft der Reibungsbremse schwanken weniger. Die vom Aktuator zur Erzeugung einer bestimmten Bremskraft aufzubringende Betätigungskraft ändert sich weniger zwischen kleinstem und größtem Reibwert des Reibbremsbelags, die Reibungsbremse lässt sich deswegen so auslegen, dass die vom Aktuator bei kleinstem Reibwert aufzubringende Betätigungskraft und Betätigungsenergie geringer sind. Ein kleinerer absoluter Reibwert zwischen dem von der Selbstverstärkungseinrichtung gegen den Bremskörper gedrückten Reibbremsbelag und dem Bremskörper lässt sich durch eine höhere Selbstverstärkung, beispielsweise durch einen spitzeren Keilwinkel eines Keilmechanismus der Selbstverstärkungseinrichtung ausgleichen und erfordert deswegen keine höhere Betätigungskraft des Aktuators. Es kann deswegen sogar für den von der Selbstverstärkungseinrichtung gegen den Bremskörper gedrückten Reibbremsbelag ein solcher mit sehr niedrigem Reibwert gewählt werden, dessen wesentliche Aufgabe die Erzeugung der Andruckkraft durch die Selbstverstärkungseinrichtung und weniger die Erzielung einer hohen Bremskraft ist. Die Bremskraft kann im Wesentlichen durch den anderen, einen größeren Reibwert aufweisenden Reibbremsbelag erzielt werden. Die Materialwahl für den von der Selbstverstärkungseinrichtung gegen den Bremskörper gedrückten Reibbremsbelag ist dadurch verhältnismäßig frei und wird jedenfalls nicht durch die Wahl eines Materials mit hohem Reibwert eingeschränkt.

Die Unteransprüche haben vorteilhafte Ausgestaltungen und Weiterbildungen der im Anspruch 1 angegeben Erfindung zum Gegenstand.

Anspruch 5 sieht vor, dass der von der Selbstverstärkungseinrichtung gegen den Bremskörper gedrückte Reibbremsbelag unterschiedliche Reibmaterialien aufweist. Grund dafür ist, dass es Reibbremsbeläge gibt, deren Reibwert sich bei hoher spezifischer Leistung (z. B. im Fadingfall) und/oder steigender Temperatur erhöht, und dass es andere Materialien gibt, bei deren Reibwert im gleichen Belastungsfall und/oder bei steigender Temperatur sinkt. Verallgemeinert kann gesagt werden, dass es Reibmaterialien gibt, deren Reibwerte sich bei Änderung eines oder mehrerer Betriebsparameter entgegengesetzt ändern. Durch Kombination von zwei (oder mehr) Reibmaterialien mit entgegengesetzter Reibwertänderung gemäss Anspruch 6 lässt sich die (relative) Reibwertschwankung insgesamt verringern. Insbesondere wird eine Verringerung der Reibwertschwankung des von der Selbstverstärkungseinrichtung gegen den Bremskörper gedrückten Reibbremsbelags bei sich ändernder Temperatur angestrebt (Anspruch 6). Damit wird eine sich ändernde Selbstverstärkung bei steigender Bremsentemperatur bei mehrmaligem oder langem Bremsen verringert, im Idealfall wird eine temperaturunabhängige Selbstverstärkung erreicht. Da der Betrag der entgegengesetzten Temperaturabhängigkeiten der Reibwerte unterschiedlicher Reibmaterialien verschieden sein kann, kann es erforderliche sein, dass die Reibmaterialien des Reibbremsbelags unterschiedlich große Flächen einnehmen, um dem Ideal der Temperaturunabhängigkeit oder der Unabhängigkeit von anderen Betriebsparametern, ggf. auch einer gewichteten Mischung mehrerer Betriebsparameter, möglichst nahe zu kommen. Dies ist Gegenstand des Anspruchs 7.

Da der Reibwert und die Reibwertschwankung nicht ausschließlich vom Reibbremsbelag sondern auch vom Bremskörper abhängig ist kann zur Erzielung einer niedrigen (relativen) Reibwertschwankung auch ein Bremskörper gewählt werden, dessen Reibfläche, die mit dem Reibbremsbelag zusammenwirkt, der von der Selbstverstärkungseinrichtung gegen den Bremskörper gedrückt wird, einen anderen Reibwert mit kleinerer Reibwertschwankung zusammen mit diesem Reibbremsbelag aufweist als die mit dem anderen Reibbremsbelag zusammenwirkende Reibfläche des Bremskörpers. Dies ist Gegenstand des Anspruchs 8. Als Bremskörper kann beispielsweise eine Bremsscheibe gewählt werden, deren eine Seite beschichtet oder in andrer Weise behandelt ist um die gewünschte, geringere Reibwertschwankung zu erzielen. Auch ist beispielsweise eine innenbelüftete Bremsscheibe mit unterschiedlichen Materialien auf beiden Seiten der Bremsscheibe möglich.

Anspruch 12 ist darauf gerichtet, dass die Reibungsbremse eine Lamellenbremse ist. Eine Lamellenbremse weist eine Anzahl miteinander drehfester Lamellen anstelle einer Bremsscheibe auf. Diese Ausgestaltung ermöglicht die Verwendung eines Reibbremsbelags, der von der Selbstverstärkungseinrichtung gegen eine der Lamellen gedrückt wird und der die gewünschte kleine Reibwertschwankung aufweist und eine Anzahl anderer Reibbremsbeläge aus einem anderen Material, die im Wesentlichen zur Erzeugung der Bremskraft dienen. Auch kann eine Lamelle aus einem anderen Material bzw. eine beschichtete oder in anderer Weise behandelte Lamelle gewählt werden, gegen die der eine Reibbremsbelag von der Selbstverstärkungseinrichtung gedrückt wird, wogegen die anderen Lamellen der Lamellenbremse aus einem anderen Material bestehen.

### Zeichnung

Die Erfindung wird nachfolgend anhand in der Zeichnung dargestellter Ausführungsbeispiele näher erläutert. Es zeigen:
- Figur 1: eine schematische Darstellung eines ersten Ausführungsbeispiels der Erfindung;
- Figur 2: einen Reibbremsbelag für eine erfindungsgemäße Reibungsbremse;
- Figur 3: eine Bremsscheibe für eine erfindungsgemäße Reibungsbremse; und
- Figur 4: eine schematische Darstellung eines zweiten Ausführungsbeispiels einer erfindungsgemäßen Reibungsbremse.

### Beschreibung des ersten Ausführungsbeispiels

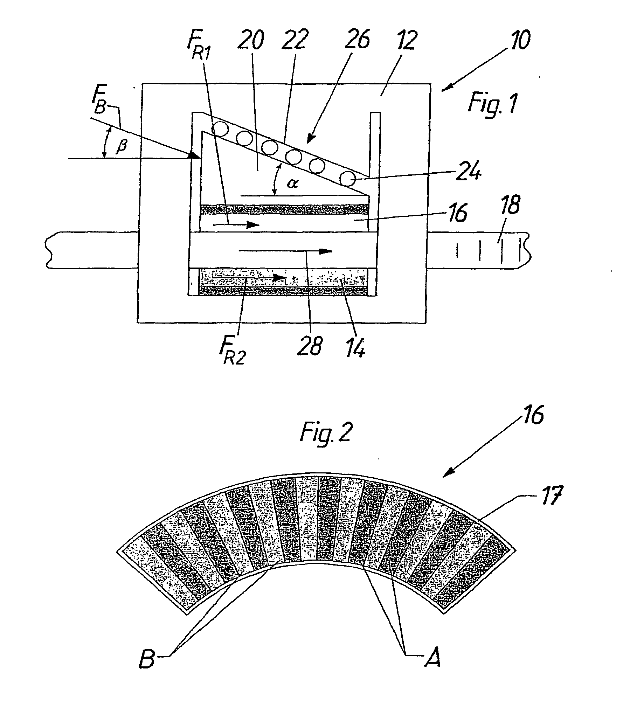

Die in Figur 1 dargestellte, erfindungsgemäße, selbstverstärkende elektromechanische Reibungsbremse ist als Scheibenbremse 10 ausgeführt. Die Scheibenbremse 10 weist einen Bremssattel 12 auf, in dem zwei Reibbremsbeläge 14, 16 beiderseits einer Bremsscheibe 18 einliegen. Der Bremssattel 12 ist als sog. Schwimmsattel ausgebildet, d. h. er ist quer zur Bremsscheibe 18 verschieblich geführt. Wird einer der beiden Reibbremsbeläge 16 zum Bremsen mit einer Andruckkraft gegen die Bremsscheibe 18 gedrückt, bewirkt eine Reaktionskraft zur Andruckkraft eine Verschiebung des Bremssattels 12 quer zur Bremsscheibe 18 und drückt dadurch den anderen Reibbremsbelag 14 gegen die andere Seite der Bremsscheibe 18. Dies ist an sich bekannt und braucht deswegen nicht näher erläutert zu werden. Die Scheibenbremse 10 ist zur Verwendung in einem nicht dargestellten Kraftfahrzeug vorgesehen, die Bremsscheibe 18 ist drehfest mit einem Fahrzeugrad verbunden.

Einer der beiden Reibbremsbeläge 14 liegt fest, d. h. unbeweglich in dem Bremssattel 12 ein. Der andere Reibbremsbelag 16 ist in Umfangsrichtung und quer zur Bremsscheibe 18 beweglich. Der bewegliche Reibbremsbelag 16 weist auf einer der Bremsscheibe 18 abgewandten Rückseite einen Keil 20 auf, über den er sich an einer Gegenkeilfläche 22 des Bremssattels 12 abstützt. Zur Reibungsminderung ist der Keil 20 mit Rollen 24 an der Gegenkeilfläche 22 wälzgelagert. Der Keil 20 und die Gegenkeilfläche 22 verlaufen unter einem Keilwinkel α schräg zur Bremsscheibe 18.

Der Keil 20 und die Gegenkeilfläche 22 bilden eine mechanische Selbstverstärkungseinrichtung 26 der Scheibenbremse 10: Wird der bewegliche Reibbremsbelag 16 zum Bremsen gegen die Bremsscheibe 18 gedrückt, übt die rotierende Bremsscheibe 18 eine Reibungskraft F_{R1} in Drehrichtung auf den Reibbremsbelag 16 aus. Die Reibungskraft F_{R1} ist in Richtung eines enger werdenden Keilspalts zwischen der Gegenkeilfläche 22 und der Bremsscheibe 18 gerichtet. Eine Drehung der Bremsscheibe 18 wird für die nachfolgenden Ausführungen in Richtung des Pfeils 28 angenommen. Aufgrund des Keilsprinzips übt die Gegenkeilfläche 22 eine Abstützkraft auf den Keil 20 und damit auf den beweglichen Reibbremsbelag 16 aus, die eine Kraftkomponente quer zur Bremsscheibe 18 aufweist. Diese Kraftkomponente quer zur Bremsscheibe 18 ist eine Andruckkraft zusätzlich zu einer von einem noch zu erläuternden Aktuator auf den Reibbremsbelag 16 ausgeübten Andruckkraft. Sie bewirkt eine Selbstverstärkung der Bremskraft.

Zur Betätigung weist die Scheibenbremse 10 einen nicht dargestellten elektromechanischen Aktuator auf, der an sich bekannt ist und deswegen an dieser Stelle nicht näher erläutert werden soll. Der elektromechanische Aktuator übt eine Betätigungskraft F_{B} auf den beweglichen Reibbremsbelag 16 oder den Keil 20 aus, die unter einem Winkel β auf den Reibbremsbelag 16 bzw. den Keil 20 einwirkt. Unter dem Gesichtspunkt einer niedrigen Betätigungskraft F_{B} ist es günstig, wenn die Betätigungskraft F_{B} unter einem Winkel β auf den Reibbremsbelag 16 bzw. den Keil 20 einwirkt, der dem Keilwinkel α entspricht. Dies ist allerdings nicht zwingend, die Betätigungskraft F_{B} kann auch in einem anderen Winkel oder beispielsweise auch quer zur Bremsscheibe 18 auf den Reibbremsbelag 16 bzw. den Keil 20 einwirken. Die Betätigungskraft F_{B} verschiebt den Reibbremsbelag 16 mit dem Keil 20 parallel zur Gegenkeilfläche 22, d. h. unter dem Keilwinkel α schräg zur Bremsscheibe 18 in deren Drehrichtung 28 in Richtung des enger werdenden Keilspalts zwischen der Gegenkeilfläche 22 und der Bremsscheibe 18. Der Reibbremsbelag 16 wird dadurch gegen die Bremsscheibe 18 gedrückt, die dadurch verursachte Reibungskraft F_{R1} zwischen der Bremsscheibe 18 und dem Reibbremsbelag 16 bewirkt in der oben beschriebenen Weise mittels der Selbstverstärkungseinrichtung 26 die Selbstverstärkung der Scheibenbremse 10.

Bei der erfindungsgemäßen Scheibenbremse 10 bestehen die beiden Reibbremsbeläge 14, 16 aus verschiedenen Materialien mit unterschiedlichen Reibwerten. Der von der Selbstverstärkungseinrichtung 26 beim Bremsen gegen die Bremsscheibe 18 gedrückte bewegliche Reibbremsbelag 16 weist eine kleinere Reibwertschwankung als der feste Reibbremsbelag 14 auf. Dies wird im Ausführungsbeispiel durch einen Reibbremsbelag 16 mit niedrigerem Reibwert erreicht. Der niedrigere Reibwert des beweglichen Reibbremsbelags 16 ist in Figur 1 durch den kürzeren Reibunskraftpfeil F_{R1} im Vergleich zum Reibungskraftpfeil F_{R2} des festen Reibbremsbelags 14 dargestellt. Dabei ist wichtig, dass eine relative Reibwertschwankung des von der Selbstverstärkungseinrichtung 26 beim Bremsen gegen die Bremsscheibe 18 gedrückten Reibbremsbelags 16 klein ist, d. h. die Reibwertschwankung bezogen auf einen absoluten Reibwert, beispielsweise einen Mittelwert aller im Betrieb auftretenden Reibwerte des Reibbremsbelags 16. Der Reibwert zwischen dem Reibbremsbelag 16 und der Bremsscheibe 18 ist nicht konstant sondern von den Betriebsbedingungen wie beispielsweise Relativgeschwindigkeit zwischen Bremsscheibe 18 und Reibbremsbelag 16, Temperatur, Schmutz und Nässe abhängig. Durch die verringerte relative Reibwertschwankung zwischen dem beim Bremsen von der Selbstverstärkungseinrichtung 26 gegen die Bremsscheibe 18 gedrückten beweglichen Reibbremsbelag 16 und der Bremsscheibe 18 ist auch die eine Schwankung der von der Selbstverstärkungseinrichtung 26 bewirkten Andruckkraft des Reibbremsbelags 16 gegen die Bremsscheibe 18 und damit eine Bremskraftschwankung verringert. Der kleinere Reibwert lässt sich durch einen spitzeren Keilwinkel α, d. h. eine höhere Selbstverstärkung der Selbstverstärkungseinrichtung 26 ausgleichen. Durch die kleinere Reibwertschwankung lässt sich eine gewünschte Bremskraft bei betriebsbedingt niedrigem Reibwert zwischen dem Reibbremsbelag 16 und der Bremsscheibe 18 mit einer kleineren Betätigungskraft F_{B} und damit mit geringerer Betätigungsenergie erzeugen. Der nicht dargestellte Aktuator der Scheibenbremse 10 kann deswegen kleiner und leichter ausgeführt sein.

Figur 2 zeigt ein erfindungsgemäßes Ausführungsbeispiel des beweglichen, von der Selbstverstärkungseinrichtung 26 beim Bremsen gegen die Bremsscheibe 18 gedrückte Reibbremsbelags 16 der Scheibenbrems 10. Der Reibbremsbelag 16 weist wie üblich einen Belagträger (Belagträgerplatte) 17 auf, auf dem erfindungsgemäß unterschiedliche Reibmaterialien A, B angebracht sind. Die Reibmaterialien A, B weisen Reibwerte auf, die sich in Abhängigkeit eines oder mehrerer Betriebsparameter der Scheibenbremse 10 entgegengesetzt ändern, d. h. bei Änderung des oder der Betriebsparameter steigt der Reibwert des einen Reibmaterials, beispielsweise A, wogegen der Reibwert des anderem Reibmaterials, beispielsweise B, sinkt. Dadurch ist die Reibwertänderung des Reibbremsbelags 16 bei Änderung des oder der Betriebsparameter der Scheibenbremse 10 insgesamt verringert, im ldealfall kompensieren sich die Reibwertänderungen der Reibmaterialien A, B und der Gesamtreibwert des beweglichen Reibbremsbelags 16 bleibt bei sich ändernden Betriebsparametem konstant. Im ldealfall ist der Gesamtreibwert des beweglichen Reibbremsbelags 16 also unabhängig von einem oder mehreren Betriebsparametem der Scheibenbremse 10. Dadurch verringert sich eine Änderung der Höhe Selbstverstärkung der Scheibenbremse 10 bei sich ändernden Betriebsparametern, da die Höhe der Selbstverstärkung linear vom Reibwert des beweglichen Reibbremsbelags 17 abhängig ist. Im ldealfall ist die Selbstverstärkung konstant und unabhängig von einem oder mehreren Betriebsparametern.

Insbesondere ändern sich die Reibwerte der Reibmaterialien A, B des beweglichen Reibbremsbelags 16 temperaturabhängig entgegengesetzt, um steigende Bremsentemperaturen bei langen und wiederholten Bremsungen zu kompensieren.

Im dargestellten Ausführungsbeispiel des Reibbremsbelags 16 sind die Reibmaterialien A, B abwechselnd in Kreisringsegmenten auf dem Belagträger 17 angeordnet. Andere Verteilungen sind möglich, es können beispielsweise Reibmaterialien A, B jeweils eine Hälfte, ein Reibmaterial A einen Mittelbereich und das andere Reibmaterial B beide Endbereiche oder beide Reibmaterialien A, B verschiedene Felder des Belagträgers 17 einnehmen (nicht dargestellt). Auch können die von den Reibmaterialien A, B eingenommenen Flächen verschieden groß sein, insbesondere wenn die Abhängigkeiten ihrer Reibwerte von dem oder den Betriebsparametern betragsmäßig verschieden groß sind.

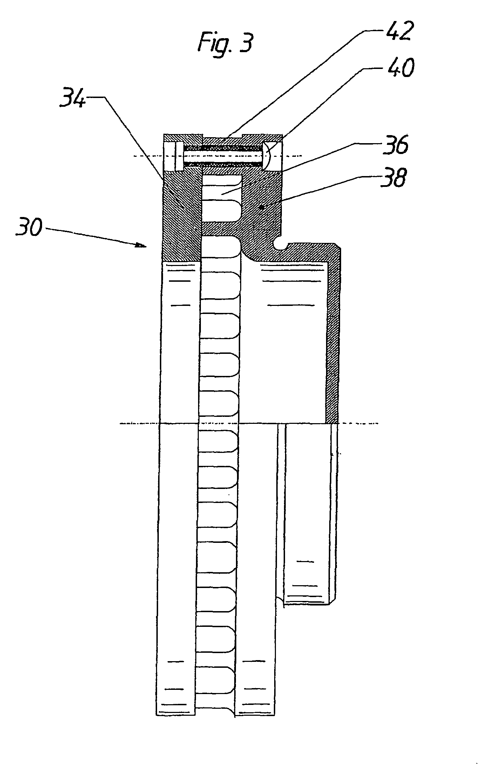

Figur 3 zeigt eine Bremsscheibe 30 für eine erfindungsgemäße Scheibenbremse, die anstelle der in Figur 1 dargestellten Bremsscheibe 18 Verwendung finden kann. Die in Figur 3 dargestellte Bremsscheibe 30 ist eine innenbelüftete Doppelbremsscheibe mit zwei starr miteinander verbundenen Bremsscheiben 32, 34, die durch Kühlrippen 36 mit Abstand voneinander gehalten sind. Reibflächen bilden jeweils nur einander abgewandte Außenflächen der beiden Bremsscheiben 32, 34. Durch unterschiedliche Materialwahl der beiden Bremsscheiben 32, 34, die die innenbelüftete Bremsscheibe 30 bilden, werden die erfindungsgemäß unterschiedlichen Reibwerte und Reibwertschwankungen auf beiden Seiten der Bremsscheibe 30 erzielt. Eine der beiden Bremsscheiben 32, die im dargestellten und beschriebenen Ausführungsbeispiel der Erfindung eine topfförmige Nabe 38 und die Rippen 36 aufweist, besteht aus Grauguss (Eisengusswerkstoff). Die andere Bremsscheibe 34 ist eine Ringscheibe beispielsweise aus Edelstahl oder einem Keramikwerkstoff. Sie weist eine kleinere relative Reibwertschwankung auf als die Grauguss-Bremsscheibe 32. Die beiden Bremsscheiben 32, 34 sind mit Nieten 40 miteinander verbunden und durch Spannhülsen 42 aneinander zentriert.

Anstelle einer Bremsscheibe 34 aus anderem Werkstoff kann auch eine der beiden Bremsscheiben 34 beschichtet oder in sonstiger Weise behandelt sein um die gewünschte geringere relative Reibwertschwankung zu erzielen. Auch kann eine Seite einer nicht innenbelüfteten Bremsscheibe eine solche Beschichtung oder sonstige Behandlung aufweisen.

Die Bremsscheibe 30 und der Bremssattel 12 werden so zueinander angeordnet, dass die Seite der Bremsscheibe 30, die die kleinere relative Reibwertschwankung aufweist, dem Reibbremsbelag 16 zugewandt ist, auf den die Selbstverstärkungseinrichtung 26 wirkt. Eine Bremsscheibe 20 mit unterschiedlichen Reibwerten und Reibwertschwankungen auf beiden Seiten ermöglicht die Verwendung von Reibbremsbelägen 14, 16 aus gleichem Werkstoff. Da der Reibwert und die Reibwertschwankung von der Materialpaarung der Bremsscheibe 30 und dem Reibbremsbelag 14, 16 abhängt können auch eine Scheibenbremse 30 mit unterschiedlichen Materialien auf beiden Seiten und zwei Reibbremsbeläge 14, 16 aus unterschiedlichen Materialien in der erfindungsgemäßen Scheibenbremse 10 Verwendung finden.

### Beschreibung des zweiten Ausführungsbeispiels

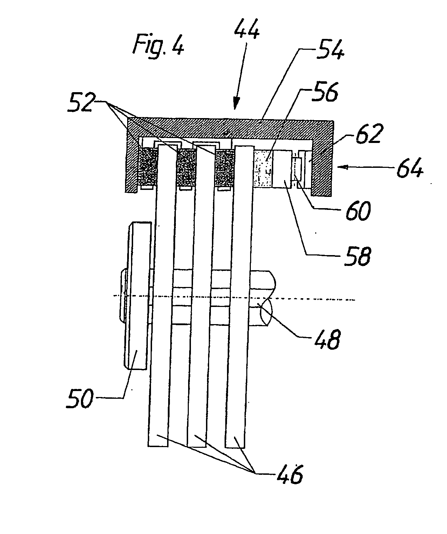

Figur 4 zeigt eine erfindungsgemäße Lamellenbremse 44 mit drei Lamellen 46, die axial verschieblich und durch Formschluss drehfest auf einer Bremsenwelle 48 aufgenommen sind. Die Bremsenwelle 48 weist einen starr mit ihr verbundenen Flansch 50 zur Befestigung eines nicht dargestellten Fahrzeugrades auf. Die Lamellen 46 können als Bremsscheiben aufgefasst werden. Zwischen den Lamellen 46 und auf einer Außenseite der Lamellen 46 sind Reibbremsbeläge 52 in einem Bremssattel 54 angeordnet. Diese Reibbremsbeläge 52 sind achsparallel zur Bremsenwelle 48, also quer zu den Lamellen 46 im Bremssattel 54 verschiebbar geführt und in Umfangsrichtung der Lamellen 46 unbeweglich. Auf der anderen Außenseite der Lamellen 46 ist ein Reibbremsbelag 56 im Bremssattel 54 angeordnet, der dem beweglichen Reibbremsbelag 16 der Scheibenbremse 10 aus Figur 1 entspricht. Dieser Reibbremsbelag 56 weist auf einer den Lamellen 46 abgewandten Rückseite einen Keil 58 auf, der sich über Rollen 60 wälzgelagert an einem Gegenkeil 62 im Bremssattel 54 abstützt. Der Keil 58, die Rollen 60 und der Gegenkeil 62 der Lamellenbremse 44 aus Figur 4 entsprechen dem Keil 20, den Rollen 24 und der Gegenkeilfläche 22 der Scheibenbremse 10 aus Figur 1, zur Vermeidung von Wiederholungen werden zur Erläuterung von Figur 4 die entsprechenden Ausführungen zu Figur 1 in Bezug genommen. Der Keil 58 und der Gegenkeil 62 bilden eine Selbstverstärkungseinrichtung 64, die der Selbstverstärkungseinrichtung 26 der Scheibenbremse 10 aus Figur 1 entspricht und in gleicher Weise funktioniert. Zum Betätigen weist die Lamellenbremse 44 einen nicht dargestellten elektromechanischen Aktuator wie die Scheibenbremse 10 aus Figur 1 auf, der den Reibbremsbelag 56 bzw. den Keil 58 in Umfangsrichtung der Lamellen 46 bzw. im Keilwinkel schräg auf die Lamellen 46 zu verschiebt. Auch bei der Lamellenbremse 44 aus Figur 4 besteht der Reibbremsbelag 56, der von der Selbstverstärkungseinrichtung 64 beaufschlagt ist, aus einem Material mit niedrigerem Reibwert und insbesondere niedrigerer relativer Reibwertschwankung als die weiteren Reibbremsbeläge 52. Auch kann wie an sich zu Figur 3 beschrieben die Lamelle 46, gegen die der Reibbremsbelag 56, der von der Selbstverstärkungseinrichtung 64 beaufschlagt wird, gedrückt wird, aus einem anderen Material als die anderen Lamellen 46 bestehen oder eine beschichtete oder in sonstiger Weise behandelte Reibfläche auf ihrer dem Reibbremsbelag 56 zugewandten Seite aufweisen, um die erfindungsgemäß gewünschte geringe relative Reibwertschwankung des von der Selbstverstärkungseinrichtung 64 beaufschlagten Reibbremsbelags 56 zu erreichen. Insbesondere bei einer Lamellenbremse 44 ist ein niedriger Reibwert des von der Selbstverstärkungseinrichtung 64 beaufschlagten Reibbremsbelags 56 unproblematisch weil die weiteren Reibbremsbeläge 52 problemlos eine ausreichend große Bremskraft erzeugen.

## Patentansprüche

1. Selbstverstärkende elektromechanische Reibungsbremse für ein Kraftfahrzeug, mit einem Reibbremsbelag (16; 56), mit einem elektromechanischen Aktuator, mit dem der Reibbremsbelag (16; 56) zum Bremsen gegen einen Bremskörper (18; 30; 46) drückbar ist, mit mindestens einem weiteren Reibbremsbelag (14; 52), der durch eine Reaktionskraft, die durch das Drücken des einen Reibbremsbelags (16; 56) gegen den Bremskörper (18; 30; 46) verursacht wird, gegen den Bremskörper (18; 30; 46) gedrückt wird, und mit einer Selbstverstärkungseinrichtung (26; 64), die eine beim Bremsen vom drehenden Bremskörper (18; 30; 46) auf einen der gegen sie gedrückten Reibbremsbeläge (16; 56) ausgeübte Reibungskraft in eine Andruckkraft wandelt, die den Reibbremsbelag (16; 56) gegen den Bremskörper (18; 30; 46) drückt, wobei die Reibwerte zwischen den Reibbremsbelägen (16;56;24;52) und dem Bremskörper (18;30;46) in Abhängigkeit eines Betriebsparameters oder mehrerer Betriebsparameter der Bremse schwanken, **dadurch gekennzeichnet, dass** der von der Selbstverstärkungseinrichtung (26; 64) gegen den Bremskörper (18; 30; 46) drückbare Reibbremsbelag (16; 56) eine kleinere Schwankung des Reibwerts mit dem Bremskörper (18; 30; 46) aufweist als der mindestens eine weitere Reibbremsbelag (14; 52).

2. Reibungsbremse nach Anspruch 1, **dadurch gekennzeichnet, dass** der von der Selbstverstärkungseinrichtung (26; 64) gegen den Bremskörper (18; 30; 56) drückbare Reibbremsbelag (16; 56) einen anderen Reibwert mit dem Bremskörper (18; 30; 56) aufweist als der mindestens eine weitere Bremsbelag (14; 52).

3. Reibungsbremse nach Anspruch 2, **dadurch gekennzeichnet, dass** der von der Selbstverstärkungseinrichtung (26; 64) gegen den Bremskörper (18; 30; 46) drückbare Reibbremsbelag (16; 56) einen kleineren Reibwert mit dem Bremskörper (18; 30; 46) aufweist als der mindestens eine weitere Bremsbelag (14; 52).

4. Reibungsbremse nach Anspruch 1, **dadurch gekennzeichnet, dass** der von der Selbstverstärkungseinrichtung (26; 64) gegen den Bremskörper (18; 30; 46) drückbare Reibbremsbelag (16; 56) aus einem anderen Material besteht als der mindestens eine weitere Bremsbelag (14; 52).

5. Reibungsbremse nach Anspruch 4, **dadurch gekennzeichnet, dass** der von der Selbstverstärkungseinrichtung (26; 64) gegen den Bremskörper (18; 30; 64) drückbare Reibbremsbelag (16; 56) unterschiedliche Reibmaterialien (A, B) aufweist.

6. Reibungsbremse nach Anspruch 5, **dadurch gekennzeichnet, dass** der von der Selbstverstärkungseinrichtung (26; 64) gegen den Bremskörper (18; 30; 64) drückbare Reibbremsbelag (16; 56) Reibmaterialien (A, B) aufweist, deren Reibwerte sich in Abhängigkeit eines oder mehrerer Betriebsparameter entgegengesetzt ändern.

7. Reibungsbremse nach Anspruch 5, **dadurch gekennzeichnet, dass** die unterschiedlichen Reibmaterialien (A, B) des von der Selbstverstärkungseinrichtung (26; 64) gegen den Bremskörper (18; 30; 64) drückbaren Reibbremsbelag (16; 56) unterschiedlich große Flächen einnehmen.

8. Reibungsbremse nach Anspruch 1, **dadurch gekennzeichnet, dass** eine Reibfläche des Bremskörpers (30), die mit dem Reibbremsbelag (16) zusammenwirkt, der von der Selbstverstärkungseinrichtung (26) gegen den Bremskörper (30) drückbar ist, einen anderen Reibwert aufweist als die mit dem anderen Reibbremsbelag (14) zusammenwirkende Reibfläche.

9. Reibungsbremse nach Anspruch 8, **dadurch gekennzeichnet, dass** eine Reibfläche des Bremskörpers (30), die mit dem Reibbremsbelag (16) zusammenwirkt, der von der Selbstverstärkungseinrichtung (26) gegen den Bremskörper (30) drückbar ist, einen kleineren Reibwert aufweist als die mit dem anderen Reibbremsbelag (14) zusammenwirkende Reibfläche.

10. Reibungsbremse nach Anspruch 1, **dadurch gekennzeichnet, dass** die Reibungsbremse eine Scheibenbremse (10) ist.

11. Reibungsbremse nach Anspruch 10, **dadurch gekennzeichnet, dass** die Scheibenbremse (10) eine Bremsscheibe (30) mit Reibflächen aus unterschiedlichen Materialien auf ihren beiden Seiten aufweist.

12. Reibungsbremse nach Anspruch 1, **dadurch gekennzeichnet, dass** die Reibungsbremse eine Lamellenbremse (44) ist.

## Claims

1. Self-energizing electromechanical friction brake for a motor vehicle, having a friction brake lining (16; 56), having an electromechanical actuator, by way of which the friction brake lining (16; 56) can be pressed against a brake body (18; 30; 46) for braking, having at least one further friction brake lining (14; 52) which is pressed against the brake body (18; 30; 46) by a reaction force which is caused by the one friction brake lining (16; 56) being pressed against the brake body (18; 30; 46), and having a self-energizing device (26; 64) which converts a friction force which is exerted on one of the friction brake linings (16; 56) which is pressed against it during braking of the rotating brake body (18; 30; 46) into a pressure force which presses the friction brake lining (16; 56) against the brake body (18; 30; 46), the coefficients of friction between the friction brake linings (16; 56; 24; 52) and the brake body (18; 30; 46) fluctuating as a function of an operating parameter or a plurality of operating parameters of the brake, **characterized in that** the friction brake lining (16; 56) which can be pressed against the brake body (18; 30; 46) by the self-energizing device (26; 64) has a smaller fluctuation in the coefficient of friction with the brake body (18; 30; 46) than the at least one further friction brake lining (14; 52).

2. Friction brake according to Claim 1, **characterized in that** the friction brake lining (16; 56) which can be pressed against the brake body (18; 30; 56) by the self-energizing device (26; 64) has a different coefficient of friction with the brake body (18; 30; 56) to the at least one further brake lining (14, 52).

3. Friction brake according to Claim 2, **characterized in that** the friction brake lining (16; 56) which can be pressed against the brake body (18; 30; 46) by the self-energizing device (26; 64) has a smaller coefficient of friction with the brake body (18; 30; 46) than the at least one further brake lining (14, 52).

4. Friction brake according to Claim 1, **characterized in that** the friction brake lining (16; 56) which can be pressed against the brake body (18; 30; 46) by the self-energizing device (26; 64) is composed of a different material to the at least one further brake lining (14, 52).

5. Friction brake according to Claim 4, **characterized in that** the friction brake lining (16; 56) which can be pressed against the brake body (18; 30; 46) by the self-energizing device (26; 64) has different friction materials (A, B).

6. Friction brake according to Claim 5, **characterized in that** the friction brake lining (16; 56) which can be pressed against the brake body (18; 30; 46) by the self-energizing device (26; 64) has friction materials (A, B), the coefficients of friction of which change as a function of one or more operating parameters.

7. Friction brake according to Claim 5, **characterized in that** the different friction materials (A, B) of the friction brake lining (16; 56) which can be pressed against the brake body (18; 30; 46) by the self-energizing device (26; 64) take up surface areas of different size.

8. Friction brake according to Claim 1, **characterized in that** a friction face of the brake body (30) which interacts with the friction brake lining (16) which can be pressed against the brake body (30) by the self-energizing device (26) has a different coefficient of friction to the friction faces which interact with the other friction brake lining (14).

9. Friction brake according to Claim 8, **characterized in that** a friction face of the brake body (30) which interacts with the friction brake lining (16) which can be pressed against the brake body (30) by the self-energizing device (26) has a smaller coefficient of friction than the friction face which interacts with the other friction brake lining (14).

10. Friction brake according to Claim 1, **characterized in that** the friction brake is a disc brake (10).

11. Friction brake according to Claim 10, **characterized in that** the disc brake (10) has a brake disc (30) with friction faces made from different materials on its two sides.

12. Friction brake according to Claim 1, **characterized in that** the friction brake is a multiple disc brake (44).

## Revendications

1. Frein à friction électromécanique, auto-amplifié, pour un véhicule automobile comprenant
une garniture de frein à friction (16 ; 56),
un actionneur électromécanique qui pousse la garniture de frein à friction (16 ; 56) contre un corps de frein (18 ; 30 ; 46) pour freiner,
au moins une autre garniture de frein à friction (14 ; 52) poussée contre le corps de frein (18 ; 30 46) par une force de réaction engendrée par la poussée de l'une des garnitures de frein à friction (16; 56) contre le corps de frein (18 ; 30 ; 46), et
une installation d'auto-amplification (26 ; 64) qui convertit une force de freinage exercée par l'organe de frein tournant (18 ; 30 ; 46) sur l'une des garnitures de frein à friction (16 ; 56) poussée contre elle, en une force de pression qui pousse la garniture de frein à friction (16, 56) contre le corps de frein (18 ; 30 ; 46),
les coefficients de friction entre les garnitures de frein à friction (16 ; 56 ; 14 ; 52) et le corps de frein (18 ; 30 ; 46) variant en fonction d'un ou de plusieurs paramètres de fonctionnement du frein,
**caractérisé en ce que**
la garniture de frein à friction (16 ; 56) poussée par l'installation d'auto-amplification (26 ; 64) contre le corps de frein (18 ; 30 ; 46) présente une variation du coefficient de friction avec le corps de frein (18 ; 30 ; 46) inférieure à celle d'au moins une autre garniture de frein à friction (14 ; 52).

2. Frein à friction selon la revendication 1,
**caractérisé en ce que**
la garniture de frein à friction (16 ; 56) poussée par l'installation d'auto-amplification (26 ; 64) contre le corps de frein (18 ; 30 ; 56) a un autre coefficient de friction sur le corps de frein (18 ; 30 ; 56) qu'au moins une autre garniture de frein (14 ; 52).

3. Frein à friction selon la revendication 2,
**caractérisé en ce que**
la garniture de frein à friction (16 ; 56) poussée par l'installation d'auto-amplification (26 ; 64) contre le corps de frein (18 ; 30 ; 46) a un coefficient de friction sur le corps de frein (18 ; 30 ; 46), plus faible qu'au moins une autre garniture de frein (14 ; 52).

4. Frein à friction selon la revendication 1,
**caractérisé en ce que**
la garniture de frein à friction (16 ; 56) poussée par l'installation d'auto-amplification (26 ; 64) contre le corps de frein (18 ; 30 ; 46) est en une autre matière qu'au moins une autre garniture de frein (14 ; 52).

5. Frein à friction selon la revendication 4,
**caractérisé en ce que**
la garniture de frein à friction (16 ; 56) poussée par l'installation d'auto-amplification (26 ; 64) contre le corps de frein (18 ; 30 ; 64) est réalisée en des matériaux de friction (A, B) différents.

6. Frein à friction selon la revendication 5,
**caractérisé en ce que**
la garniture de frein à friction (16 ; 56) poussée par l'installation d'auto-amplification (26 ; 64) contre le corps de frein (18 ; 30 ; 64) présente d'autres matériaux de friction (A, B) dont les coefficients de friction varient en sens opposé selon un ou plusieurs paramètres de fonctionnement.

7. Frein à friction selon la revendication 5,
**caractérisé en ce que**
les matériaux de friction différents (A, B) de la garniture de frein à friction (16; 56) poussés par l'installation d'auto-amplification (26 ; 64) contre les corps de frein (18 ; 30 ; 64) occupent des surfaces de dimensions différentes.

8. Frein à friction selon la revendication 1,
**caractérisé en ce qu'**
une surface de friction du corps de frein (30) qui coopère avec la garniture de frein à friction (16) et qui est poussée par l'installation d'auto-amplification (26) contre le corps de frein (30) a un autre coefficient de friction que la surface de friction coopérant avec l'autre garniture de frein à friction.

9. Frein à friction selon la revendication 8,
**caractérisé en ce qu'**
une surface de friction du corps de frein (30) qui coopère avec la garniture de frein à friction (16) et qui est poussée par l'installation d'auto-amplification (26) contre le corps de frein (30) a un coefficient de friction plus faible que la surface de friction coopérant avec l'autre garniture de frein à friction (14).

10. Frein à friction selon la revendication 1,
**caractérisé en ce qu'**
il est un frein à disque (10).

11. Frein à friction selon la revendication 10,
**caractérisé en ce que**
le frein à disque (10) comporte un disque de frein (30) muni de surfaces de freinage réalisées en des matériaux différents sur les deux faces.

12. Frein à friction selon la revendication 1,
**caractérisé en ce qu'**
il est un frein à lamelles (44).
